# EUROPEAN PATENT SPECIFICATION

(11) **EP 2 715 855 B1**
(45) Date of publication and mention of the grant of the patent: **12.08.2015**
(21) Application number: 12737891.7
(22) Date of filing: 25.05.2012
(51) Int. Cl.: H01M 10/052, H01M 4/587, H01M 4/1393, C01B 31/04, H01M 4/04

(54) **A PROCESS FOR THE PREPARATION OF KISH GRAPHITIC LITHIUM-INSERTION ANODE MATERIALS FOR LITHIUM-ION BATTERIES**
VERFAHREN ZUR HERSTELLUNG VON ZUR INSERTION VON LITHIUM BEFÄHIGTEN ANODENMATERIALIEN AUS GARSCHAUM-GRAPHIT FÜR LITHIUMIONENBATTERIEN
PROCESSUS DE PRÉPARATION DE MATÉRIAUX POUR ANODES AVEC INSERTION DE LITHIUM DANS DES INCLUSIONS DE GRAPHITE POUR DES BATTERIES LITHIUM-ION

(30) Priority: 03.06.2011 IN DE15772011
(43) Date of publication of application: 09.04.2014
(73) Proprietor: Council Of Scientific & Industrial Research, New Delhi 110 001 (IN)
(72) Inventor: KUMAR, Thrivikraman, Prem, Karaikudi 630006 Tamil Nadu (IN); SHUKLA, Ashok, Kumar, Karaikudi 630006 Tamil Nadu (IN); KUMARI, Thanudass, Sri, Devi, Karaikudi 630006 Tamil Nadu (IN); STEPHAN, Arul, Manuel, Karaikudi 630006 Tamil Nadu (IN)
(74) Representative: Biggi, Cristina
(86) International application number: PCT/IN2012/000368
(87) International publication number: WO 2012/164577

(56) References cited:
- JP-A- 63 210 007
- LEE Y H ET AL: "Graphite with fullerene and filamentous carbon structures formed from iron melt as a lithium-intercalating anode", MATERIALS LETTERS, NORTH HOLLAND PUBLISHING COMPANY. AMSTERDAM, NL, vol. 57, no. 5-6, 1 January 2003 (2003-01-01), pages 1113-1119, XP004399974, ISSN: 0167-577X, DOI: 10.1016/S0167-577X(02)00940-0

## Description

### FIELD OF INVENTION

The present invention relates to kish graphitic lithium-insertion anode materials and negative electrodes prepared therefrom. Particularly, the present invention relates to the production of kish graphite with high reversible capacities useful as active materials in negative electrode materials in lithium-ion batteries by a simple, inexpensive method from organic polymeric waste precursors.

The kish graphite prepared according to the present invention can be used for high-capacity negative electrodes in lithium-ion batteries. The method also provides a process for the production of such graphite from natural and synthetic organic polymers including non-biodegradable plastics or mixtures thereof. The graphitic products deliver reversible capacities between 300 and 600 mAh.g⁻¹ with flat voltage profiles for electrochemical insertion / deinsertion of lithium at potentials less than 200 mV *v*.

### BACKGROUND OF THE INVENTION & DESCRIPTION OF PRIOR ART

Lithium-ion batteries and lithium-ion polymer batteries commonly employ carbonaceous materials as active materials in their negative electrodes. Both natural and synthetic carbons have been examined for their lithium insertion properties for possible application as anodes in lithium-ion batteries. Electrochemical lithium insertion-deinsertion behavior of carbonaceous materials depend on a number of structural and morphological features of the host material including particle size, surface area, surface texture, degree of crystallinity, hydrogen content and the nature of surface functional groups. Candidate carbon materials for anode-active materials in lithium-ion batteries come broadly in two forms: graphitic and disordered.

Disordered carbons lack long-range crystalline ordering. They often contain substantial amounts of hydrogen and exhibit lithium insertion capacities much larger than the 372 mAh.g⁻¹ theoretically possible with perfectly graphitic structures. Moreover, they have sloping discharge profiles, which translate to decreasing cell voltages as the discharge proceeds. Reference may, for example, be made to the works of T. Zheng, J.S. Xue, J.R. Dahn, Chem. Mater. 8 (1996) 389; H. Fujimoto, A. Mabuchi, K. Tokumitsu, T. Kasuh, J. Power Sources 54 (1995) 440; S. Yata, Y. Hato, H. Kinoshita, N. Ando, A. Anekawa, T. Hashimoto, M. Yamaguchi, K. Tanaka, T. Yamabe, Synth. Met. 73 (1995) 273; Y. Mori, T. Iriyama, T. Hashimoto, S. Yamazaki, F. Kawakami, H. Shiroki, T. Yamabe, J. Power Sources 56 (1995) 205; and J.S. Xue, J.R. Dahn, J. Electrochem. Soc. 142 (1995) 3668, which report lithium-insertion capacities much in excess of 372 mAh.g⁻¹. An added disadvantage of such carbons is the large hysteresis in their charge-discharge profiles. On the other hand, graphitic carbons have only moderately high lithium storage capacities, limited to 372 mAh.g⁻¹ by the highest stoichiometry of LiC₆ of the lithiated carbon. However, their relatively flat potential profiles close to the redox potential of the Li⁺/Li couple, facile kinetics and reversibility of the lithium intercalation process, safety, non-toxicity and low cost make them attractive as lithium insertion anode materials.

Synthetic production of graphitic materials from soft or graphitizable carbons involves the application of high temperatures, often above 2,800°C, which makes graphitization process energy-intensive and expensive. Accordingly, there exists a need for a low-cost production process for carbonaceous anode-active materials that possess desirable electrochemical features of graphitic and disordered carbons, especially flat discharge profiles at potentials close to that of lithium, reversible capacities surpassing the theoretical value of graphitic and exhibiting very low hysteresis in their charge-discharge profiles. The desirability of such anodes become more pertinent than ever before considering that several emerging application areas such as electric traction demand anodes with higher capacities.

Reference may be made to patent JP2000182617A2 "carbon material for lithium secondary battery electrode and its manufacture, and lithium secondary battery", wherein the carbon material for a lithium secondary battery electrode is a carbon powder prepared by carbonizing and graphitizing kish graphite together with pitch, resin or a mixture thereof to prepare the electrode. However, the kish graphite described in this invention are prepared by a method different from that in known art and exhibit high capacities.

Reference may be made to the journal, "J. Electrochem. Soc. 137 (1990) 2009" wherein R. Fong, U. von Sacken and J.R. Dahn disclosed graphitic materials that can deliver capacities close to 372 mAh.g⁻¹, the theoretical lithium-intercalation capacity of graphite. However, this value of discharge capacity was achieved only under very low rates of current drain. Several reports are available in the open literature on the use of graphitic materials as anodes for lithium-ion batteries, although none of them claim capacities above 372 mAh.g⁻¹. The present invention addresses the shortcomings of the carbon varieties, providing a method for the production of kish graphitic materials that exhibit flat discharge profiles at potentials close to that of lithium, reversible capacities between 300 and 600 mAh.g⁻¹ and very low hysteresis in their charge-discharge profiles

The source of the kish graphitic anode materials described in this invention is gray cast iron. Grey cast iron, so called because of the grey color of its fracture surface, contains carbon in the form of graphite in a matrix that consists of ferrite, pearlite or a mixture of the two. Kish graphite is the carbon thrown out when a supersaturated solution of carbon in iron is cooled. In other words, the method of generating graphite between grain boundaries by cooling a supersaturated solution of carbon in iron, usually in the form of cast iron or pig iron, is a low-temperature alternative to the production of highly graphitic carbons. The size and shape in which the graphite is present in the matrix is largely a function of parameters such as the solidification temperature, cooling rate, inoculants and the nucleation state of the melt.

Graphitization of iron/steel castings is known for a long time in the ferrous metallurgy industry [US patent 1,328,845 (1920); US patent 3,615,209 ((1971); US 2,415,196 (1947); US patent 3,656,904 (1972); US patent 4,299,620 (1981); US patent 4,404,177 (1983); Japanese patent JP60246214 (1984); Japanese patent JP63210007 (1988); US patent 6,022,518 (2000); US patent 0,134,149 A1 (2007); T. Noda, Y. Sumiyoshi, N. Ito, Carbon, 6 (1968) 813; J. Derbyshire, A.E.B. Presland, D.L. Trimm, Carbon, 10 (1972), 114; J. Derbyshire, A.F.B. Presland, D.L. Trimm, Carbon 13 (1975) 111; J. Derbyshire, D.L. Trimm, Carbon 13 (1975) 189; S.B. Austerman, S.M. Myron, J.W. Wagner, Carbon 5 (1967) 549; Y. Hishiyama, A. Ono, T. Tsuzuku, Carbon 6 (1968) 203; A. Oberlin, J.P. Rouchy, Carbon 9 (1971) 39; A. Oya, S. Otani, Carbon 19 (1981) 391]. However, such graphitization processes are employed for the production of special cast irons with improved mechanical properties.

In this invention, the conditions of preparation of kish graphites are so modified as to yield products that possess structural and morphological features that facilitate facile and higher accommodation of lithium ions such that the modified kish graphites resulting therefrom exhibit excellent cyclability and lithium insertion capacities. The main objective of the present invention is to provide high-capacity graphitic negative electrodes for lithium-ion batteries and a method of preparing the same, which obviates the drawbacks of the prior art detailed above, which include moderate capacities exhibited by graphitic carbons, and large hysteresis and sloping discharge curves exhibited by disordered carbons.

Based on the prior art, wherein the applicability of disordered carbons, in spite of their high capacities, is limited by large hysteresis and sloping discharge curves and that of graphitic carbons, despite their flat discharge profiles, is limited by their moderate capacities, it is desirable to either suppress the hysteresis and sloping nature of disordered carbons or to enhance the capacity of graphitic carbons. In fact, Lee et al. (Y.H. Lee, K.C. Pan, Y.Y. Lin, V. Subramanian, T. Prem Kumar, G.T.K. Fey, Mater. Lett. 57 (2003) 1113; and Y.H. Lee, K.C. Pan, Y.Y. Lin, T. Prem Kumar, G.T.K. Fey, Mater. Chem. Phys. 82 (2003) 750) showed kish graphites obtained by the conventional method, wherein excess carbon in a supersaturated solution of carbon is precipitated as graphite upon cooling, exhibited not only a flat discharge profile but also capacities as high as 430 mAh.g⁻¹. The excess capacities of such electrodes were attributed to the presence of nanocarbon structures in the kish graphitic products used in them. Thus, it was shown that graphitic carbons could be synthesized at temperatures as low as 1,600°C with petroleum coke as a carbon precursor and that such graphitic negative electrodes exhibited flat discharge curves and delivered capacities in excess of the 372 mAh.g⁻¹ that is theoretically possible with perfectly graphitic structures. It must, however, be noted that the deliverable capacities of these graphitic materials were much lower than those realizable with disordered carbons.

Reference is drawn to the publication: Pyrolitic carbon from biomass precursors as anode materials for lithium batteries, by Stephan AM,Kumar TP, Ramesh R, et al., MATERIALS SCIENCE AND ENGINEERING A-STRUCTURAL MATERIALS PROPERTIES MICROSTRUCTURE & PROCESSING Volume: 430 Issue: 1-2 Pages: 132-137 Published: AUG 25, 2006. It may be appreciated that the method of production of carbon in the above paper is a simple carbonization process. Specifically, it was done by carbonizing banana fibers, wherein the biomass was treated with concentrated solutions of ZnCl2 or KOH under flowing nitrogen. This is conceptually different from the present invention, wherein the carbon is first dissolved in a melt of steel at high temperatures and precipitated out by cooling.

Thus, keeping in view the drawbacks of the prior art, the inventors of the present invention realized that there exists a dire need to provide a process for the preparation of kish graphitic carbons with high reversible capacities useful as negative electrode materials in lithium-ion batteries by a simple and relatively inexpensive process.

### OBJECTS OF THE INVENTION

The main objective of the present invention is to provide high-capacity kish graphitic lithium-insertion anode materials and negative electrodes prepared therefrom for lithium-ion batteries which obviates the drawbacks of the hitherto known prior art as detailed above.

Another objective of the present invention is to provide a method for preparing kish graphitic negative electrode materials whose reversible capacities exceed 372 mAh.g⁻¹, the theoretical lithium intercalation capacity of graphite.

Still another objective of the present invention is to provide a method for preparing high-capacity kish graphitic materials with flat voltage profiles in their discharge curves.

Yet another objective of the present invention is to provide a method for preparing high-capacity kish graphitic materials from natural and synthetic polymeric substances or mixtures thereof as precursors.

A further objective of the present invention is to provide a method for the production of high-capacity kish graphitic lithium-insertion anode materials from natural and synthetic polymeric materials including non-biodegradable plastic wastes or mixtures thereof.

Another objective of this invention is to provide a method for the production of high-capacity kish graphitic lithium-insertion anode materials whose structural and electrochemical features can be altered by the addition of metals / metalloids singly or in combination as inoculants in the steel melt from which the graphite is generated.

### BRIEF DESCRIPTION OF THE DRAWINGS:

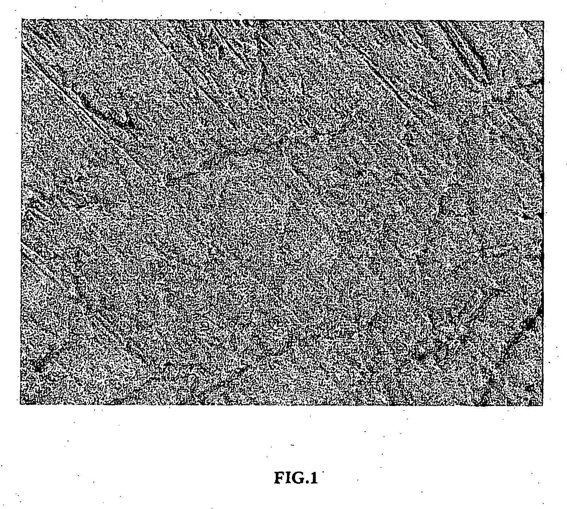

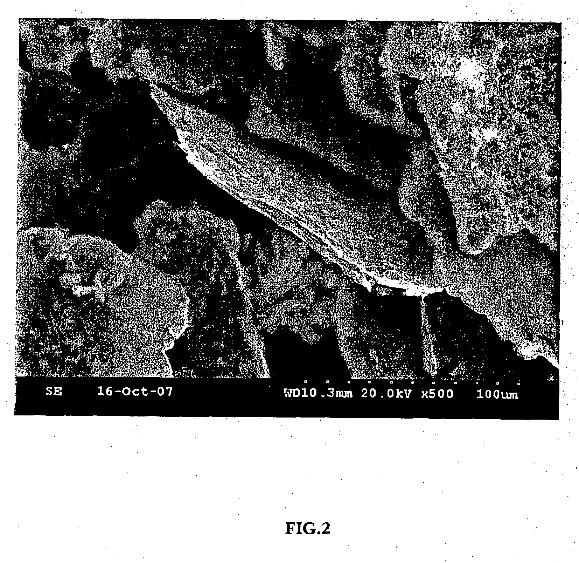

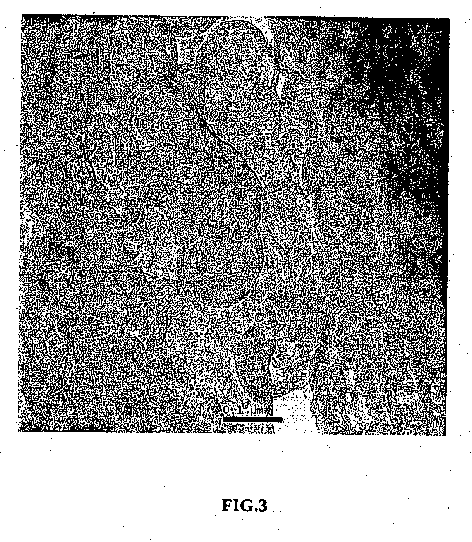

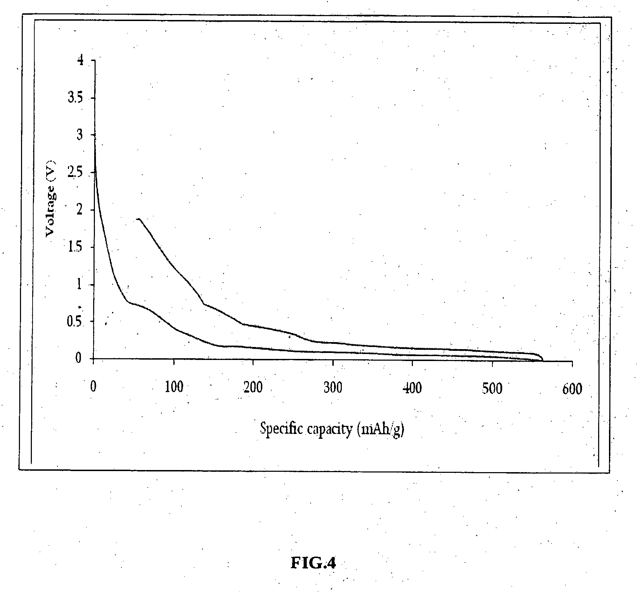

The present invention is illustrated in figure 1 to figure 4 of the drawings accompanying this specification.
**Figure 1** shows a typical metallurgical image of kish graphite precipitated between grain boundaries in the steel.
**Figure 2** shows a typical scanning electron microscopic image of the kish graphitic product derived by using bismuth as an inoculant.
**Figure 3** shows a transmission electron microscopic image of kish graphite derived from polyvinyl chloride as a precursor, showing serpentine nanocarbon structures embedded in the graphitic matrix.
**Figure 4** shows the first charge-discharge profile of a kish graphitic product obtained with phenyl-formaldehyde resin as a carbon precursor.

### SUMMARY OF THE INVENTION:

The present invention provides a method for the preparation of kish graphitic lithium-insertion anode materials and negative electrodes prepared therefrom for lithium-ion batteries wherein the kish graphitic anode materials, exhibiting reversible capacities exceeding 372 mAh.g⁻¹ with flat discharge curves, are precipitated upon cooling from supersaturated solutions of carbon in iron melts, the precursors for the carbon being organic natural arid synthetic polymeric substances including non-biodegradable plastic wastes or mixtures thereof.

Accordingly, the present invention provides a process for the preparation of kish graphitic lithium-insertion anode materials for lithium-ion batteries comprising the steps of:
(a) dissolving polymeric waste precursor in a melt of iron at a temperature in the range of 1,400 to 2,000°C for a duration of 5 minutes to 120 minutes under reducing atmosphere of either flowing nitrogen or a blanket of carbon dioxide formed by the reaction of the carbon precursor with atmospheric oxygen top obtain a mixture;
(b) cooling the mixture as obtained in step (a) to a temperature in the range 1,000°C to 1,400°C at a rate in the range of 2 to 200°C per minute to obtain the solid mass of precipitated carbon;
(c) cutting the solid mass of precipitated carbon as obtained in step (b) into ingots;
(d) leaching the ingots as obtained in step (c) with HCl and HF followed by filtering, washing and drying to obtain the kish graphite;
(e) preparing a slurry of kish graphite as obtained in step (d) with a conducting carbon and polyvinylidene fluoride binder in *N*-methyl-2-pyrrolidone;
(f) coating the slurry as obtained in step (e) on metal substrates followed by drying and pressing to obtain the lithium-insertion anode.

In an embodiment of the present invention, polymeric waste precursor comprising biomass waste and non-biodegradable plastic wastes is selected from the group consisting of, bagasse, natural rubber, bitumen, cellulose, sucrose, cellulose acetate, acrylonitrile-butadiene-styrene ter polymer, polyacrylamide, polyacrylic acid, polyacrylonitrile, polyamides, polybutadiene styrene rubber, polycarbonate, polychloroprene (neoprene rubber), polyesters, polyethylene, poly(methyl methacrylate), polypropylene, polytetrafluoroethylene, polyvinyl acetate, polyvinyl alcohol, polyvinyl chloride, polystyrene, polyvinylidene fluoride, polyurethanes and silicone, and resins such as phenol-formaldehyde resins.

In another embodiment of the present invention, the carbon content in the added polymeric waste precursor ranging from 2 to 20% by weight of the iron.

In still another embodiment of the present invention, the polymeric waste precursor is either carbonized *in situ* in the melt or added to the melt in a pre-carbonized form.

In yet another embodiment of the present invention, the melt of iron consists of cast iron or pig iron.

In still another embodiment of the present invention, the melt of iron is uninoculated or inoculated with metals / metalloids including antimony, bismuth, boron, chromium. magnesium, manganese, molybdenum, tin, titanium, vanadium and zirconium.

In yet another embodiment of the present invention, wherein the conducting carbon consists of natural graphite or carbon formed from partial oxidation of hydrocarbons.

In a further embodiment of the present invention, the slurry comprises kish graphite in the range of 50 to 95%, conducting carbon in the range 0 to 40% and polyvinylidene fluoride binder in *N*-methyl-2-pyrrolidone in the range 2 to 10%.

In another embodiment of the present invention, the metal substrate is selected from copper, nickel and stainless steel.

In yet another embodiment of the present invention, the total concentration of the metallic/metalloid inoculants is between 0 and 2% with respect to the steel.

In still another embodiment of the present invention, the kish graphitic anode materials exhibit reversible capacities between 300 and 600 mAh.g⁻¹ in coin cell configurations with metallic lithium and an electrolyte of 1M LiPF₆ in 1:1 (v/v) ethylene carbonate-diethyl carbonate between 3.000 and 0.005 V at a C/10 rate with respect to 372 mAh.g⁻¹ for stage-I LiC₆ composition at 25°C.

### DETAILED DESCRIPTION OF THE INVENTION

The present invention addresses the shortcomings of common varieties of graphitic and disordered carbons, providing a method for the production of kish graphitic materials that exhibit flat discharge profiles at potentials close to that of lithium, reversible capacities between 300 and 600 mAh.g⁻¹, and very low hysteresis in their charge-discharge profiles.

The invention provides a process for the production of high-capacity kish graphitic lithium-insertion anode materials and negative electrodes prepared therefrom for lithium-ion batteries, which comprises a method for the preparation of graphitic negative electrode materials that exhibit flat discharge curves with reversible capacities exceeding 372 mAh.g⁻¹ (in the range of 300-600 mAh.g⁻¹⁾ the method of preparation of the graphitic materials involving the use of carbon-containing natural and synthetic polymeric precursors that include, but hot limited to, bagasse, natural rubber, bitumen, cellulose, sucrose, cellulose acetate, acrylonitrile-butadiene-styrene terpolymer, polyacrylamide, polyacrylic acid, polyacrylonitrile, polyamides, polybutadiene styrene rubber, polycarbonate, polychloroprene (neoprene rubber), polyesters, polyethylene, poly(methyl methacrylate), polypropylene, polytetrafluoroethylene, polyvinyl acetate, polyvinyl alcohol, polyvinyl chloride, polystyrene, polyvinylidene fluoride, polyurethanes and silicones, and resins such as phenol-formaldehyde resin, the precursors or their mixtures being pre-carbonized in an inert atmosphere or simultaneously carbonized and then dissolved in a melt of cast iron or pig iron, uninoculated or inoculated with metals / metalloids that include, but not limited to antimony, bismuth, boron, chromium, magnesium, manganese, molybdenum, tin, titanium, vanadium and zirconium, and maintained under a reducing atmosphere at temperatures between 1,400 and 2,000°C, the carbon content in the added polymeric precursor ranging from 2 to 20% by weight of the iron, with the duration of carbon dissolution in the iron melt being between 5 minutes and 120 minutes and followed by cooling of the steel melt to temperature between 1,000 to 1,400°C at a cooling rate between 2 and 200°C per minute, the precipitated carbon separated from the metallic and non-metallic constituents by lixiviation with mineral acids, washed and dried, the dried product made into electrode structures by slurry-coating a mixture of the graphitic product with a conducting carbon, polyvinylidene fluoride binder in *N*-methyl-2-pyrrolidone on substrates such as copper, nickel, stainless steel, etc., the content of the graphitic product, conducting carbon and polyvinylidene fluoride in the coating, respectively, being between 50 to 95%, 0 to 25% and 2 to 10%, drying and pressing the coated electrodes, the resulting electrodes upon charging and discharging yielding reversible capacities in the range of 300-600 mAh.g⁻¹.

A large variety of kish graphitic products can be obtained depending on the kind of organic polymeric precursors used. A further variety can be introduced by use of metallic / metalloid inoculants in the steel melt. Dissolution of carbonizable precursors including biomaterials and non-biodegradable plastics in molten iron/steel, and inoculating the melt with metals / metalloids, steps that lead to kish graphitic materials with varied morphological features and with a variety of nanocarbon structures embedded in it.

The amount of the organic precursor should be such that the carbon derivable from the precursor should at least match the solubility of carbon in the steel at the temper- ature of dissolution but not exceeding 10% by weight over and above the solubility limit. Production of the said kish graphitic materials is based on a catalytic graphitizat- ion process by which the excess carbon present in supersaturated solutions of carbon in steel melts get precipitated upon cooling. A notable feature of this invention is that the carbon for dissolution is derived from carbon-containing natural and synthetic polymeric precursors including non-biodegradable plastic wastes that litter our surroundings. A further feature of this invention relates to structural and morphological modification of the product by use of metals / metalloids as inoculant in the steel melt from which the graphite is generated. Thus, this invention provides a method for conversion of inexpensive organic polymeric products including non-biodegradable plastic wastes that litter our surroundings into kish graphite useful as high-capacity anode-active materials in lithium-ion batteries.

The method of preparing the negative electrode according to this invention does not need to be discriminated as long as the method provides a negative electrode that has a good ability to impart shape and bestows chemical, thermal and electrochemical stability when used in a lithium-ion battery configuration. For example, it is often desirable to use an electrically conducting matrix material such as carbon black and a fine powder or a dispersion or solution of a polymeric binding material such as carboxymethyl cellulose, polyethylene, polyvinyl alcohol, polytetrafluoroethylene and polyvinylidene fluoride in conjunction with the graphitic active material and then mixing and kneading them into a paste in a suitable medium such as water, N-methyl-2-pyrrolidone, hot-pressing or slurry-coating the resulting mixture, and cutting out electrodes of suitable sizes. However, because the kish graphitic product according to this invention is electrically conducting, it is not particularly necessary to have a further addition of a conducting carbon matrix material for the preparation of the negative electrode.

The negative electrode-active material according to the present invention is a mixed power of a conducting matrix carbon material and a kish graphitic product according to this invention, the conducting carbon matrix material is preferred to have a behavior as a powder for making a slurry thereof in terms of particle size distribution, surface area, tap density and wettability, and the kish graphitic product derived from polyethylene as a polymeric precursor with pig iron containing manganese as the molten medium, gave a reversible capacity of 450 mAh.g⁻¹ at a C/10 charge and discharge rate calculated with respect to a value of 372 mAh.g⁻¹ for perfectly graphitic structures. The kish graphitic product derived from acrylonitrile-butadiene-styrene terpolymer with cast iron without any added inoculant as the molten medium, gave a capacity of 378 mAh**.**g^{**-**1} between 3.000 and 0.005 V at a C/10 charge and discharge rate.

The present invention provides a method for generating graphitic materials suitable for use in the negative electrode of lithium-ion batteries. The novelty of the invention is that such technologically useful graphitic materials are generated from carbon-containing natural and synthetic polymeric precursors including non-biodegradable plastic wastes or mixtures thereof. In this respect, it provides a method to convert cheap polymeric waste materials that litter our surroundings, including non-biodegradable plastic wastes, into a technologically useful product.

*The following examples are given by way of illustration only and therefore should not be construed to limit the scope of the present invention*.

### EXAMPLE - 1

To a melt of cast iron containing 50 ppm (0.005%) by weight of bismuth and maintained at 1,700°C, 2% by weight of bitumen was added. The temperature was maintained at 1,400°C with the crucible kept rocking for 120 min. Subsequently, the melt was cooled to 1,000°C at a rate of 2°C per minute. The cooled solid mass was then cut into ingots of convenient sizes and leached with HCl and HF. The resulting graphitic product was collected, filtered, washed and dried. A slurry containing 50% of the product, 40% conducting carbon and 10% polyvinylidene fluoride in *N*-methyl-2-pyrrolidone was coated on a copper substrate. A coin cell in which the coated electrode was coupled with metallic lithium in an electrolyte of 1M LiPF₆ in 1:1 (v/v) ethylene carbonate-diethyl carbonate mixture delivered reversible capacities of 311 mAh/g between 3.000 and 0.005 V at a C/10 rate with respect to 372 mAh.g⁻¹ for stage-I LiC₆ composition, with the entire voltage plateau region appearing below 200 mV vs. Li⁺/Li.

### EXAMPLE - 2

To a melt of pig iron maintained at 1,800°C, carbon obtained by pre-carbonizing 10% by weight (w.r.t. iron) of polyvinyl chloride was added. The pre-carbonization was carried out separately in a graphite crucible under flowing nitrogen in a tubular furnace at 800°C for 2 h. The temperature of the melt was maintained at 2,000°C with the crucible kept rocking for 5 min. Subsequently, the melt was cooled to 1,400°C at a rate of 200°C per minute. The cooled solid mass was then cut into ingots of convenient sizes and leached with HCl and HF. The resulting graphitic product was collected, filtered, washed and dried. A slurry containing 95% of the product and 5% polyvinylidene fluoride in *N*-methyl-2-pyrrolidone was coated on a stainless steel substrate. A coin cell in which the coated electrode was coupled with metallic lithium in an electrolyte of 1M LiPF₆ in 1:1 (v/v) ethylene carbonate-diethyl carbonate mixture delivered reversible capacities of 352 mAh/g between 3.000 and 0.005 V at a C/10 rate with respect to 372 mAh.g⁻¹ for stage-I LiC₆ composition, with the entire voltage plateau region appearing below 180 mV vs. Li⁺/Li.

### EXAMPLE - 3

To a melt of pig iron containing 2% by weight of zirconium and maintained at 1,800°C, acrylonitrile-butadiene-styrene terpolymer was added such that the amount of carbon derivable from the polymer was 20%. The temperature was maintained at 1,800°C with the crucible kept rocking for 100 min. Subsequently, the melt was cooled to 1,400°C at a rate of 50°C per minute. The cooled solid mass was then cut into ingots of convenient sizes and leached with HCl and HF. The resulting graphitic product was collected, filtered, washed and dried. A slurry containing 80% of the product, 15% conducting carbon and 5% polyvinylidene fluoride in *N*-methyl-2-pyrrolidone was coated on a copper substrate. A coin cell in which the coated electrode was coupled with metallic lithium in an electrolyte of 1M LiPF₆ in 1:1 (*v*/*v*) ethylene carbonate-diethyl carbonate mixture delivered reversible capacities of 438 mAh/g between 3.000 and 0.005 V at a C/10 rate with respect to 372 mAh.g⁻¹ for stage-I LiC₆ composition, with the entire voltage plateau region appearing below 200 mV vs. Li⁺/Li.

### EXAMPLE - 4

To a melt of pig iron maintained at 1,700°C, phenyl-formaldehyde resin was added such that the amount of carbon derivable from the polymer was 7%. The temperature was maintained at 1,700°C with the crucible kept rocking for 40 min. Subsequently, the melt was cooled to 1,400°C at a rate of 100°C per minute. The cooled solid mass was then cut into ingots of convenient sizes and leached with HCl and HF. The resulting graphitic product was collected, filtered, washed and dried. A slurry containing 85% of the product, 10% conducting carbon and 5% polyvinylidene fluoride in *N*-methyl-2-pyrrolidone was coated on a copper substrate. A coin cell in which the coated electrode was coupled with metallic lithium in an electrolyte of 1M LiPF₆ in 1:1 (v/v) ethylene carbonate-diethyl carbonate mixture delivered reversible capacities of 562 mAh/g between 3.000 and 0.005 V at a C/10 rate with respect to 372 mAh.g⁻¹ for stage-I LiC₆ composition, with the entire voltage plateau region appearing below 200 mV vs. Li⁺/Li.

### EXAMPLE - 5

To a melt of cast iron containing 0.5% by weight of magnesium and maintained at 1,800°C, polystyrene was added such that the amount of carbon derivable from the polymer was 8%. The temperature was maintained at 1,800°C with the crucible kept rocking for 30 min. Subsequently, the melt was cooled to 1,200°C at a rate of 50°C per minute. The cooled solid mass was then cut into ingots of convenient sizes and leached with HCl and HF. The resulting graphitic product was collected, filtered, washed and dried. A slurry containing 70% of the product, 25% conducting carbon and 5% polyvinylidene fluoride in N-methyl-2-pyrrolidone was coated on a copper substrate. A coin cell in which the coated electrode was coupled with metallic lithium in an electrolyte of 1M LiPF₆ in 1:1 (v/v) ethylene carbonate-diethyl carbonate mixture delivered reversible capacities of 380 mAh/g between 3.000 and 0.005 V at a C/10 rate with respect to 372 mAh.g⁻¹ for stage-I LiC₆ composition, with the entire voltage plateau region appearing below 200 mV vs. Li⁺/Li.

### ADVANTAGES

The main advantages of the present invention are:
- Production of kish graphitic carbons with high reversible capacities useful as negative electrode materials in lithium-ion batteries by a simple and relatively inexpensive process.
- Use of relatively low temperatures for the graphitization process.
- Use of a variety of carbonaceous and carbonizable precursors including biomaterials and bio-wastes.
- High capacities of the kish graphitic products for the electrochemical intercalation reaction.
- Extremely flat voltage profiles for electrochemical intercalation and deintercalation reactions, which appear entirely at potentials less than 200 mV vs. Li⁺/Li.

## Claims

1. A process for the preparation of kish graphitic lithium-insertion anode materials for lithium-ion batteries comprising the steps of:
(a) dissolving polymeric waste precursor in a melt of iron at a temperature in the range of 1,400 to 2,000°C for a duration of 5 minutes to 120 minutes under reducing atmosphere of either flowing nitrogen or a blanket of carbon dioxide formed by the reaction of the carbon precursor with atmospheric oxygen to obtain a mixture;
(b) cooling the mixture as obtained in step (a) to a temperature in the range 1,000°C to 1,400⁰C at a rate in the range of 2 to 200°C per minute to obtain the solid mass of precipitated carbon;
(c) cutting the solid mass of precipitated carbon as obtained in step (b) into ingots;
(d) leaching the ingots as obtained in step (c) with HCl and HF followed by filtering, washing and drying to obtain the kish graphite;
(e) preparing a slurry of kish graphite as obtained in step (d) with a conducting carbon and polyvinylidene fluoride binder in *N*-methyl-2-pyrrolidone;
(f) coating the slurry as obtained in step (e) on metal substrates followed by drying and pressing to obtain the lithium-insertion anode.

2. A process as claimed in step (a) of claim 1, wherein the polymeric waste precursor comprising biomass waste and non-biodegradable plastic wastes is selected from the group consisting of, bagasse, natural rubber, bitumen, cellulose, sucrose, cellulose acetate, acrylonitrile-butadiene-styrene terpolymer, polyacrylamide, polyacrylic acid, polyacrylonitrile, polyamides, polybutadiene styrene rubber, polycarbonate, polychloroprene (neoprene rubber), polyesters, polyethylene, poly(methyl methacrylate), polypropylene, polytetrafluoroethylene, polyvinyl acetate, polyvinyl alcohol, polyvinyl chloride, polystyrene, polyvinylidene fluoride, polyurethanes and silicones, and resins such as phenol-formaldehyde resins.

3. A process as claimed in step (a) of claim 1, wherein the carbon content in the added polymeric waste precursor ranging from 2 to 20% by weight of the iron.

4. A process as claimed in step (a) of claim 1, wherein the polymeric waste precursor is either carbonized *in situ* in the melt or added to the melt in a pre-carbonized form.

5. A process as claimed in step (a) of claim 1, wherein the melt of iron consists of cast iron or pig iron.

6. A process as claimed in step (a) of claim 1, wherein the melt of iron is uninoculated or inoculated with metals / metalloids including antimony, bismuth, boron, chromium. magnesium, manganese, molybdenum, tin, titanium, vanadium and zirconium.

7. A process as claimed in step (e) of claim 1, wherein the conducting carbon consists of natural graphite or carbon formed from partial oxidation of hydrocarbons.

8. A process as claimed in step (e) of claim 1, wherein the slurry comprises kish graphite in the range of 50 to 95%, conducting carbon in the range 0 to 40% and polyvinylidene fluoride binder in *N*-methyl-2-pyrrolidone in the range 2 to 10%.

9. A process as claimed in step (e) of claim 1, wherein the metal substrate is selected from copper, nickel and stainless steel.

10. A process as claimed in claim 5, wherein the total concentration of the metallic/metalloid inoculant is between 0 and 2% with respect to the steel.

11. A process as claimed in claim 1, wherein the kish graphitic anode materials exhibit reversible capacities between 300 and 600 mAh.g⁻¹ in coin cell configurations with metallic lithium and an electrolyte of 1M LiPF₆ in 1:1 (v/v) ethylene carbonate-diethyl carbonate between 3.000 and 0.005 V at a C/10 rate with respect to 372 mAh.g⁻¹ for stage-I LiC₆ composition at 25°C.

## Patentansprüche

1. Verfahren zur Vorbereitung von zur Insertion von Lithium befähigten Anodenmaterialien aus Garschaumgraphit für Lithiumionenbatterien, umfassend folgende Schritte:
(a) Auflösen einer Polymerabfall-Vorläufersubstanz in einer Eisenschmelze bei einer Temperatur im Bereich von 1.400 bis 2000 °C für eine Dauer von 5 Minuten bis 120 Minuten unter Reduzierung der Atmosphäre entweder des strömenden Stickstoffs oder einer Kohlendioxidschicht, die durch die Reaktion der Kohlenstoff-Vorläufersubstanz mit Luftsauerstoff gebildet wird, zum Erhalt eines Gemisches;
(b) Kühlen des im Schritt (a) erhaltenen Gemisches auf einer Temperatur im Bereich von 1.000 °C bis 1.400 °C mit einer Rate im Bereich von 2 bis 200 °C pro Minute zum Erhalt der festen Masse des gefällten Kohlenstoffs;
(c) Schneiden der festen Masse des gefällten Kohlenstoffs, wie sie im Schritt (b) erhalten wurde, in Rohblöcke;
(d) Auswaschen der im Schritt (c) erhaltenen Rohblöcke mit HCl und HF, gefolgt von Filtern, Reinigen und Trocknen zum Erhalt des Garschaumgraphits;
(e) Vorbereiten eines Breis von Garschaumgraphit, wie dieser im Schritt (d) erhalten wurde, mit einem Leitkohlenstoff und Polyvinylidenfluorid-Binder in N-Methyl-2-Pyrrolidon;
(f) Beschichten des im Schritt (e) erhaltenen Breis auf Metallsubstraten, gefolgt von Trocknen und Pressen zum Erhalt der zur Insertion von Lithium befähigten Anode.

2. Verfahren gemäß dem Schritt (a) nach Anspruch 1, wobei die Polymerabfall-Vorläufersubstanz, umfassend Biomasseabfall und nicht biologisch abbaubare Kunststoffabfälle, aus der Gruppe, bestehend aus Bagasse, Naturkautschuk, Bitumen, Zellulose, Saccharose, Celluloseacetat, Acrylnitril-Butadien-Styrol-Mischpolymerisat, Polyacrylamid, Polyacrylsäure, Polyacrylonitril, Polyamiden, Polybutadien-Styrol-Kautschuk, Polycarbonat, Polychloropren (Neoprene-Kautschuk), Polyestern, Polyethylen, Poly(methylmethacrylat), Polypropylen, Polytetrafluorethylen, Polyvinylacetat, Polyvinylalkohol, Polyvinylchlorid, Polystyrol, Polyvinylidenfluorid, Polyurethanen und Silikone, und Harzen wie Phenolformaldehydharzen ausgewählt wird.

3. Verfahren gemäß dem Schritt (a) nach Anspruch 1, wobei der Kohlenstoffgehalt in der hinzugefügten Polymerabfall-Vorläufersubstanz im Bereich von 2 bis 20 Gew.-% des Eisens beträgt.

4. Verfahren gemäß dem Schritt (a) nach Anspruch 1, wobei die Polymerabfall-Vorläufersubstanz entweder in situ in der Schmelze verkohlt oder in einer vorverkohlten Form zur Schmelze hinzugefügt wird.

5. Verfahren gemäß dem Schritt (a) nach Anspruch 1, wobei die Eisenschmelze aus Gußeisen oder Roheisen besteht.

6. Verfahren gemäß dem Schritt (a) nach Anspruch 1, wobei die Eisenschmelze nicht geimpft oder mit Metallen/Halbmetallen geimpft wird, die Antimon, Bismut, Bor, Chrom, Magnesium, Mangan, Molybdän, Zinn, Titan, Vanadium und Zirkonium enthalten.

7. Verfahren gemäß dem Schritt (e) nach Anspruch 1, wobei der Leitkohlenstoff aus natürlichem Graphit oder Kohlenstoff, der durch partielle Oxidation von Kohlenwasserstoffen gebildet ist, besteht.

8. Verfahren gemäß dem Schritt (e) nach Anspruch 1, wobei der Brei Garschaumgraphit im Bereich von 50 bis 95%, Leitkohlenstoff im Bereich von 0 bis 40% und Polyvinylidenfluorid-Binder in N-Methyl-2-Pyrrolidon im Bereich von 2 bis 10% umfasst.

9. Verfahren gemäß dem Schritt (e) nach Anspruch 1, wobei das Metallsubstrat aus Kupfer, Nickel und Edelstahl ausgewählt wird.

10. Verfahren nach Anspruch 5, wobei die Gesamtkonzentration des Metall-/Halbmetallimpfstoffs zwischen 0 und 2% in Bezug auf den Stahl beträgt.

11. Verfahren nach Anspruch 1, wobei die Anodenmaterialien aus Garschaumgraphit reversible Kapazitäten zwischen 300 und 600 mAh.g⁻¹ in Knopfzellekonfigurationen mit metallischem Lithium und einem Elektrolyt von 1M LiPF₆ in 1:1 (v/v) Ethylencarbonates-Diethylcarbonates zwischen 3,000 und 0,005 V mit einer Rate von C/10 in Bezug auf 372 mAh.g⁻¹ für die Phase I der LiC₆-Zusammensetzung bei 25 °C aufweisen.

## Revendications

1. Processus de préparation de matériaux pour anodes d'écume de graphite avec insertion de lithium pour des batteries lithium-ion, comprenant les étapes suivantes :
(a) dissolution d'un précurseur de déchets polymères dans un bain de fer en fusion à une température comprise entre 1 400 et 2 000°C pendant une durée allant de 5 minutes à 120 minutes sous atmosphère réductrice de flux d'azote ou d'une couverture de gaz carbonique formée par la réaction d'un précurseur de carbone avec l'oxygène atmosphérique pour obtenir un mélange ;
(b) refroidissement du mélange obtenu à l'étape (a) à une température comprise entre 1 000°C et 1 400°C à une vitesse allant de 2 à 200°C par minute pour obtenir la masse solide du précipité de carbone ;
(c) découpage de la masse solide du précipité de carbone obtenue à l'étape (b) en lingots ;
(d) lessivage des lingots obtenus à l'étape (c) avec HCl et HF, puis filtration, lavage et séchage pour obtenir l'écume de graphite ;
(e) préparation d'une suspension épaisse d'écume de graphite obtenue à l'étape (d) avec un carbone conducteur et un liant polyfluorure de vinylidène dans la N-méthyl-2-pyrrolidone ;
(f) application de la suspension épaisse obtenue à l'étape (e) sur des substrats métalliques, puis séchage et pressage pour obtenir l'anode avec insertion de lithium.

2. Processus selon l'étape (a) de la revendication 1, dans lequel le précurseur de déchets polymères comprenant des déchets de biomasse et des déchets plastiques non biodégradables, est sélectionné dans le groupe comprenant bagasse, caoutchouc naturel, bitume, cellulose, saccharose, acétate de cellulose, terpolymère acrylonitrile-butadiène-styrène, polyacrylamide, acide polyacrylique, polyacrylonitrile, polyamides, caoutchouc styrène-butadiène, polycarbonate, polychloroprène (caoutchouc de néoprène), polyesters, polyéthylène, poly(méthacrylate de méthyle), polypropylène, polytétrafluoroéthylène, acétate de polyvinyle, alcool polyvinylique, polychlorure de vinyle, polystyrène, polyfluorure de vinylidène, polyuréthanes et silicones, et résines comme les résines phénol-formaldéhyde.

3. Processus selon l'étape (a) de la revendication 1, dans lequel le contenu carbone dans le précurseur de déchets polymères additionné est compris entre 2 et 20% en poids du fer.

4. Processus selon l'étape (a) de la revendication 1, dans lequel le précurseur de déchets polymères est carbonisé in situ dans le bain de fusion ou additionné au bain de fusion sous une forme précarbonisée.

5. Processus selon l'étape (a) de la revendication 1, dans lequel le bain de fer en fusion consiste en fer de fonte ou en fonte brute.

6. Processus selon l'étape (a) de la revendication 1, dans lequel le bain de fer en fusion est inoculé ou non avec des métaux / métalloïdes comprenant antimoine, bismuth, bore, chrome, magnésium, manganèse, molybdène, étain, titane, vanadium et zirconium.

7. Processus selon l'étape (e) de la revendication 1, dans lequel le carbone conducteur consiste en graphite naturel ou en carbone formé à partir d'une oxydation partielle d'hydrocarbures.

8. Processus selon l'étape (e) de la revendication 1, dans lequel la suspension épaisse comprend d'écume de graphite à un taux de 50 à 95%, du carbone conducteur à un taux de 0 à 40% et du liant polyfluorure de vinylidène dans la N-méthyl-2-pyrrolidone à un taux de 2 à 10%.

9. Processus selon l'étape (e) de la revendication 1, dans lequel le substrat métallique est choisi parmi cuivre, nickel et acier inoxydable.

10. Processus selon la revendication 5, dans lequel la concentration totale d'inoculant métallique/métalloïde est comprise entre 0 et 2% par rapport à l'acier.

11. Processus selon la revendication 1, dans lequel les matériaux pour anodes d'écume de graphite présentent des capacités réversibles comprises entre 300 et 600 mAh.g⁻¹ dans des configurations de piles boutons avec lithium métal et un électrolyte de 1M LiPF₆ dans le carbonate d'éthylène-carbonate de diéthyle 1:1 (v/v) entre 3 000 et 0,005 V à un régime de C/10 par rapport à 372 mAh.g⁻¹ pour une composition au stade I LiC₆ à 25°C.
